Europäisches Patentamt

European Patent Office

Office européen des brevets

(19)

(11) Veröffentlichungsnummer : **0 347 701 B1**

# (12) EUROPÄISCHE PATENTSCHRIFT

(45) Veröffentlichungstag der Patentschrift :
04.03.92 Patentblatt 92/10

(51) Int. Cl.⁵ : **F16L 49/00, F23J 13/04**

(21) Anmeldenummer : **89110587.6**

(22) Anmeldetag : **12.06.89**

(54) **Dichtende Rohrverbindung und Verfahren zu ihrer Herstellung.**

(30) Priorität : **22.06.88 DE 3821019**

(43) Veröffentlichungstag der Anmeldung :
**27.12.89 Patentblatt 89/52**

(45) Bekanntmachung des Hinweises auf die
Patenterteilung :
**04.03.92 Patentblatt 92/10**

(84) Benannte Vertragsstaaten :
**AT BE CH FR GB IT LI NL**

(56) Entgegenhaltungen :
**EP-A- 0 225 967**
**DE-A- 3 618 492**
**DE-U- 8 628 365**

(73) Patentinhaber : **Schott-Rohrglas GmbH**
**Theodor-Schmidt-Strasse 25**
**W-8580 Bayreuth (DE)**

(72) Erfinder : **Männl, Reinhard**
**Kohllohstrasse 41**
**W-8596 Mitterteich (DE)**
Erfinder : **Reuter, Walter**
**Fritz-Seebach-Strasse 28**
**W-8596 Mitterteich (DE)**

(74) Vertreter : **Dr. Fuchs, Dr. Luderschmidt**
**Dipl.-Phys. Seids, Dr. Mehler Patentanwälte**
**Abraham-Lincoln-Strasse 7**
**W-6200 Wiesbaden (DE)**

EP 0 347 701 B1

## Beschreibung

Die vorliegende Erfindung betrifft eine dichtende Rohrverbindung mit stumpf aneinandergesetzten zur Durchleitung von Gasen geeigneten Röhren, außenliegendem Befestigungsteil und zwischen zwei Rohrenden als Dichtring eingeklebtem Distanzring sowie ein Verfahren zur Herstellung einer solchen Rohrverbindung.

Aus der DD-C-251 177 ist ein Verfahren zur Schornsteinsanierung mit Glasrohren bekannt. Dabei werden nacheinander Glasrohrabschnitte mit aufgesetzten Verbindungsmuffen durch die Öffnung des Schornsteinkopfes auf ein zuvor eingesetztes Glasrohr-T-Stück, das auf einem gemauerten Sockel aufliegt und das eine Verbindungsmuffe aufweist, aufgesetzt, wobei die Verbindungsmuffen nach dem Aufstecken mit einer Dederon-Schnur auf den Umfang gespannt und dadurch gegen Verrutschen bei der Montage gesichert werden. Anschließend wird der Zwischenraum zwischen den Glasrohrabschnitten und der Schornsteininnenwand mit Sand verfüllt.

Diese Verbindungsart durch aufgesetzte Muffen und Fixierschnüre hat den Nachteil, daß die dadurch entstehende Verbindung nicht ausreichend gasdicht ist. Ein weiterer Nachteil besteht darin, daß diese Verbindungen auf Dauer nicht genügend feuchtigkeitsdicht sind.

In der DE-A-3 618 494 werden Rohrverbindungen für zylinderförmige Rohre aus einem spannungsempfindlichen Werkstoff, z. B. Glas oder Keramik, beschrieben. Zwischen den jeweils zu verbindenden Teilen der Rohre sind Dicht- und Abstandsringe angebracht. Auf die Außenwände der Rohrenden sowie auf die Innenwand eines Rohrverbindungsteils werden ein Silanhaftmittel und darauf dann eine Epoxydharzschicht aufgetragen. Nachteilig bei dieser Art der Verbindung ist aber, daß sie weder zugfest noch temperaturbeständig ist und den hohen Anforderungen an Dauerhaftigkeit und Stabilität, wie sie z. B. an ein Kaminsystem gestellt werden, nicht gerecht wird.

Aufgabe der Erfindung ist es daher, eine dichtende Rohrverbindung zu schaffen, die die geschilderten Nachteile nicht aufweist und, im Falle von Kaminsystemen, die DIN 18 160, die Richtlinien für Querschnittsverminderung an Hausschornsteinen (Fassung September 1985) sowie die Richtlinien für die Prüfung und Benutzung von feuchtigkeitsunempfindlichen Hausschornsteinen (Fassung April 1987) erfüllt, wobei gleichzeitig die Herstellungskosten gering gehalten werden können. Des weiteren ist es eine Aufgabe der Erfindung, ein Verfahren zur Herstellung solcher Rohrverbindungen zur Verfügung zu stellen, das es gestattet, die Verbindung selbst sehr einfach durchzuführen.

Diese Aufgaben werden erfindungsgemäß durch eine dichtende Rohrverbindung mit den Kennzeichen des Anspruchs 1 und ein Verfahren nach Anspruch 8 gelöst. Vorteilhafte Ausführungsformen und Verfahrensmodifikationen sind in den jeweiligen abhängigen Ansprüchen unter Schutz gestellt. Die Erfindung wird nachfolgend anhand eines Ausführungsbeispiels in Verbindung mit den Zeichnungen näher erläutert. Es zeigt:

Figur 1 einen Schnitt durch eine Ausführungsform einer erfindungsgemäßen dichtenden Rohrverbindung;

Figur 2 eine schematische Ansicht der erfindungsgemäßen Bandage vor dem Einbau.

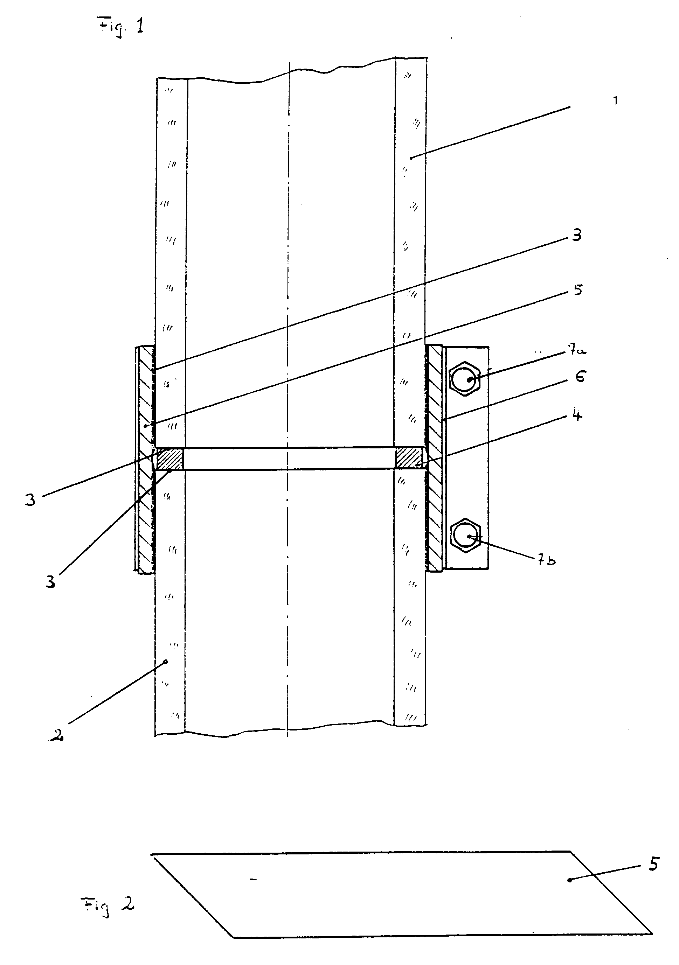

Das in Figur 1 dargestellte dichtende Verbindungssytem besteht aus stumpf aneinander gesetzten Glasröhren 1, 2 zur Durchleitung von Gasen. Dabei wird zunächst ein Distanzring 4 aus mineralischem Material mit Hilfe eines säure- und temperaturbeständigen Keramik-Klebers 3 (zum Beispiel Frenzelit 1000, Firma Frenzelit, Bad Berneck, Bundesrepublik Deutschland) zwischen zwei Rohrenden eingeklebt. Dadurch wird eine gasdichte Verbindung der Glasröhren 1, 2 erreicht. Zum Feuchtigkeitsschutz bei kondensierenden Gasen kann dieser Distanzring 4 mit Kunststoff, zum Beispiel Silikon, ummantelt sein. Nun wird eine Bandage 5, bestehend aus ISOPLAN Spezial (Firma Frenzelit, Bad Berneck, Bundesrepublik Deutschland) in Wasser eingeweicht, dadurch wird dieses Material biegsam.

Diese Bandage 5 wird dann auf einer oder beiden Seiten mit säure- und temperaturbeständigem Keramik-Kleber 3 (zum Beispiel Frenzelit 1000, Firma Frenzelit, Bad Berneck, Bundesrepublik Deutschland) bestrichen und um den Rohrstoß gelegt. Zum Ausgleich der auftretenden Durchmessertoleranzen wird die Bandage 5 an ihren Enden schräg zugeschnitten. Durch die Abschrägung der Bandage 5 tritt an der Schrägkante eine ausreichende Dichtung auch bei unterschiedlichen Durchmessern auf.

Figur 2 zeigt eine Ausführungsform der Bandage 5 vor der Montage, wobei die Schrägung 45° beträgt.

Zum Anpressen der Bandage 5 an das Rohr wird als Abschluß ein Klemmband 6 um den Rohrstoß und die Bandage 5 herum gespannt. Das Klemmband 6 verbleibt dort auch nach dem Aushärten der Klebeverbindung und, im Falle eines Kaminsystems, dem Einbau des gesamten Systems in einen feuerfesten Schacht beziehungsweise einen bereits vorhandenen Schornstein. Das Rohrleitungssystem wird dabei ausschließlich mit Distanzhaltern in diesem Schacht beziehungsweise dem Schornstein gehalten. Es erfolgt keine Verfüllung des Zwischenraums. Diese Methode gestattet daher eine rasche und einfache Montage. Außerdem gewährleistet das Klemmband 6 eine ausreichende Dichtkraft auch in der Schnittlinie der Bandage 5. Der Hauptvorteil besteht darin, daß auch bei Verwendung der üblichen langsam aushärtenden anorganischen Kleber eine rasche Montage durch den Zusammenhalt die verbindenden Bestandteile ermöglicht wird. Bei der vorliegenden

2

Ausführungsform des erfindungsgemäßen dichtenden Verbindungssystems besteht das Klemmband 6 aus Edelstahl, was eine sehr einfache Montage sowie eine hohe Korrosionsbeständigkeit gewährleistet. Das Klemmband 6 wird mit Hilfe von Spannmitteln, in der vorliegenden Ausführungsform mit Hilfe von Spannschrauben 7a, 7b, die auf dem Klemmband 6 befestigt sind, gespannt. Die Spannschrauben 7a, 7b werden mit einem bestimmten Drehmoment zwischen 10 und 30 Nm, vorzugsweise 15 bis 20 Nm, angezogen, was zu einer hervorragenden Verklebung zwischen dem Klemmband 6, der Bandage 5 und den aneinandergesetzten Glasröhren 1, 2 führt.

Dadurch ergibt sich eine dauerhafte, zugfeste Verbindung der aneinandergesetzten Rohre 1, 2, die die Bedingungen und Anforderungen der DIN 18 160, Teil 6 erfüllt, und die es ermöglicht, bis zu 1000°C heiße Gase durch das Rohrleitungssystem zu leiten. Des weiteren ist diese Verbindung sowohl feuchtigkeitsdicht als auch druckdicht entsprechend den vorne aufgeführten Richtlinien.

Die Verbindungstechnik wurde so gewählt, damit bei Montage, aber auch im späteren Einsatz, insbesondere im Kaminbereich, auf die zu verbindenden Rohre nur Druckbelastungen ausgeübt werden.

## Patentansprüche

1. Dichtende Rohrverbindung mit stumpf aneinandergesetzten zur Durchleitung von Gasen geeigneten Röhren (1, 2), außenliegendem Befestigungsteil und zwischen zwei Rohrenden eingeklebtem Distanzring (4) als Dichtung, dadurch gekennzeichnet, daß die Rohrverbindung eine um die Rohrenden gewickelte und durch ein Klemmband (6) fixierte Bandage (5) und um die Bandage (5) und die Rohrenden herum festspannende Spannmittel aufweist.

2. Rohrverbindung nach Anspruch 1, dadurch gekennzeichnet, daß die Röhren (1, 2) aus mineralischem Material, aus Glas oder aus metallischem Material bestehen.

3. Rohrverbindung nach Anspruch 1, dadurch gekennzeichnet, daß der Distanzring (4) aus mineralischem Material besteht.

4. Rohrverbindung nach Anspruch 3, dadurch gekennzeichnet, daß der Distanzring (4) mit Kunststoff ummantelt ist.

5. Rohrverbindung nach einem der vorhergehenden Ansprüche, dadurch gekennzeichnet, daß die Bandage (5) an ihren Enden abgeschrägt ist.

6. Rohrverbindung nach einem der vorhergehenden Ansprüche, dadurch gekennzeichnet, daß die Bandage (5) aus mineralischem Material besteht.

7. Rohrverbindung nach einem der vorhergehenden Ansprüche, dadurch gekennzeichnet, daß das Klemmband (6) aus Edelstahl besteht.

8. Verfahren zur Herstellung einer druck- und zugfesten, säure- und temperaturbeständigen sowie gas- und feuchtigkeitsdichten Verbindung von mit glatten Enden versehenen Rohren mit jeweils zwischen den beiden stumpf aneinander gesetzten Rohrenden eines Rohrstoßes als Dichtung angebrachten Distanzringen für ein Rohrleitungssystem, insbesondere ein Kaminsystem, zur Durchleitung von Gasen, dadurch gekennzeichnet, daß

a) der Distanzring zwischen die Stirnseiten der in einem Rohrstoß aneinandergrenzenden Rohrenden mittels eines säure- und temperaturbeständigen Klebers eingeklebt,
b) der Rohrstoß darauf mit einer mit diesem Kleber bestrichenen Bandage umwickelt und
c) noch vor dem Aushärten des Klebers ein Klemmband um diesen mit der Bandage umwickelten Rohrstoß gespannt wird.

9. Verfahren nach Anspruch 8, dadurch gekennzeichnet, daß als Kleber ein Keramikkleber verwendet wird.

## Claims

1. Sealing pipe connection, having pipes (1, 2) suitable for piping gases and set against one another end to end, an outside securing part, and a spacer ring (4) bonded between two pipe ends as the sealing means, characterized in that the pipe connection has a binding (5) wound around the pipe ends and fixed by means of a clamping band (6) and clamping means clamping tightly around the binding (5) and the pipe ends.

2. Pipe connection according to Claim 1, characterized in that the pipes (1, 2) are of mineral material, glass or metal material.

3. Pipe connection according to Claim 1, characterized in that the spacer ring (4) is of mineral material.

4. Pipe connection according to Claim 3, characterized in that the spacer ring (4) is encased in plastics.

5. Pipe connection according to one of the preceding claims, characterized in that the binding (5) is bevelled

3

off at its end.

6. Pipe connection according to one of the preceding claims, characterized in that the binding (5) is of mineral material.

7. Pipe connection according to one of the preceding claims, characterized in that the clamping band (6) is of special steel.

8. Method of manufacturing a pressure- and tension-resistant, acid- and heat-resistant and gas- and moisture-tight connection of pipes provided with smooth ends, having in each case between the two pipe ends, which are set against one another end to end, of a pipe joint, spacer rings mounted as a sealing means for a pipeline system, in particular a chimney system, for piping gases, characterized in that

a) the spacer ring is bonded between the end sides of the pipe ends adjoining one another in a pipe joint, by means of an acid- and temperature-resistant bonding agent,

b) the pipe joint is then wound around with a binding painted with a bonding agent, and

c) before the bonding agent has cured, a clamping band is tensioned around this pipe joint wound around with the binding.

9. Method according to Claim 8, characterized in that a ceramic bonding agent is used as the bonding agent.

## Revendications

1. Jonction de tuyaux étanche, comprenant des tuyaux (1, 2) montés bout à bout et convenant pour le passage de gaz, un élément de fixation externe et une bague d'écartement (4) collée en tant que joint d'étanchéité entre deux extrémités de tuyau, caractérisée par le fait que la jonction de tuyaux présente un bandage (5) enroulé autour des extrémités des tuyaux et fixé par un collier de serrage (6) et des moyens de serrage serrés solidement autour du bandage (5) et des extrémités des tuyaux.

2. Jonction de tuyaux selon la revendication 1, caractérisée par le fait que les tuyaux (1, 2) sont en matériau minéral, en verre ou en matériau métallique.

3. Jonction de tuyaux selon la revendication 1, caractérisée par le fait que la bague d'écartement (4) est en matériau minéral.

4. Jonction de tuyaux selon la revendication 3, caractérisée par le fait que la bague d'écartement (4) est entourée d'une enveloppe en matière plastique.

5. Jonction de tuyaux selon l'une quelconque des revendications précédentes, caractérisée par le fait que le bandage (5) est biaisé à ses extrémités.

6. Jonction de tuyaux selon l'une quelconque des revendications précédentes, caractérisée par le fait que le bandage (5) est en matériau minéral.

7. Jonction de tuyaux selon l'une quelconque des revendications précédentes, caractérisée par le fait que le collier de serrage (6) est en acier spécial.

8. Procédé de fabrication d'une jonction résistant à la compression et à la traction, aux acides et aux températures élevées et étanche aux gaz et à l'humidité, de tuyaux munis d'extrémités lisses, comprenant des bagues d'écartement montées chaque fois en tant que joints d'étanchéité entre les deux extrémités de tuyau, montées bout à bout, d'une jonction de tuyaux pour un système de conduites, notamment un système de cheminée pour le passage de gaz, caractérisé par le fait que

a) la bague d'écartement est collée entre les faces frontales des extrémités de tuyau adjacentes dans une jonction de tuyaux, au moyen d'une colle résistant aux acides et aux températures élevées,

b) la jonction de tuyaux est ensuite entourée d'un bandage enduit de cette colle et

c) avant le durcissement de la colle, un collier de serrage est serré autour de cette jonction de tuyaux entourée par le bandage.

9. Procédé selon la revendication 8, caractérisé par le fait qu'une colle céramique est utilisée en tant que colle.

Fig. 1

Fig 2